# DEMANDE DE BREVET EUROPEEN

(11) **EP 2 381 086 A1**
(43) Date de publication de la demande: **26.10.2011**
(21) Numéro de dépôt: 11158952.9
(22) Date de dépôt: 21.03.2011
(51) Int. Cl.: F02N 15/06, F02N 15/02, F02N 15/08, F16D 7/02

(54) **Démarreur équipé d'un limiteur de couple associé à un pignon d'entraînement et limiteur de couple correspondant**

(30) Priorité: 22.03.2010 FR 1052036
(71) Demandeur: Valeo Equipements Electriques Moteur, 94046 Créteil Cedex (FR)
(72) Inventeur: Faucon, Guy, 69003 Lyon (FR); Drozdek, Marius, 38280 Villette d'Anthon (FR)
(74) Mandataire: de Lambilly Delorme, Marie Pierre

(57) **Abrégé**

Démarreur (21,55) comportant un arbre d'entraînement (3) sur lequel est monté un pignon (2) d'entraînement destiné à engrener avec la couronne d'entrainement associée à un moteur thermique. Ce limiteur de couple (1) est formé par des disques de friction (7,8) installés de part et d'autre du pignon (2) monté fou sur l'arbre (3), ces disques de friction (7,8) étant entraînés en rotation par l'arbre (3). Une butée (10,10') bloque en translation axiale un côté de l'ensemble formé par les disques (7,8) et le pignon (2), tandis qu'un élément élastique (13,14) applique une pression axiale de l'autre côté de l'ensemble. Le pignon (2) est ainsi maintenu en pression entre les faces frontales (7.1,8.1) des deux disques de friction (7,8).

L'invention concerne également le limiteur de couple (1) associé.

## Description

### Domaine de l'invention

L'invention concerne un démarreur, en particulier de moteur de moteur thermique, équipé d'un limiteur de couple associé au pignon d'entraînement du démarreur, ainsi que le limiteur de couple correspondant.

Afin de démarrer le moteur thermique d'un véhicule, il est connu d'utiliser un démarreur capable de transmettre une énergie de rotation à un vilebrequin du moteur par l'intermédiaire d'une couronne d'entraînement. A cet effet, le démarreur comporte un pignon d'entraînement installé sur un arbre d'entraînement. Ce pignon d'entraînement est pourvu de dents pouvant s'engrener sur des dents de la couronne d'entraînement.

L'invention trouve une application particulièrement avantageuse avec les démarreurs dans lesquels le pignon d'entraînement engrène de manière permanente avec la couronne d'entraînement. L'invention est également applicable avec les démarreurs munis d'un ensemble lanceur relié à un contacteur mobile par l'intermédiaire d'un levier susceptible de faire passer le pignon d'une position de repos, dans laquelle le pignon est dégagé de la couronne d'entraînement, à une position active dans laquelle le pignon engrène avec la couronne d'entraînement et réciproquement.

### Etat de la technique

Quel que soit son type, le démarreur peut subir des chocs mécaniques importants lors de son fonctionnement.

Par exemple, pour les démarreurs à lanceur, lors du démarrage du moteur thermique, lorsque la rotation du démarreur commence, les dents du pignon peuvent glisser contre les dents de la couronne avant de s'engager entre celles-ci. Le recouvrement axial des dents respectives du pignon et de la couronne peut alors être très faible et l'énergie cinétique de rotation de démarreur est brutalement transmise à la couronne. A cet instant les contraintes de contact sont très élevées, ce qui peut avec l'usure entraîner la destruction de dents de la couronne. Ce phénomène est connu sous le terme « fraisage ».

En outre, en cours de démarrage, si le système d'injection du véhicule présente des dysfonctionnements aléatoires, il peut se produire des explosions prématurées dans le cycle de combustion, généralement appelées en anglais « backfire » qui sont susceptibles de générer des couples supérieurs à la valeur du couple maximal produit par le moteur électrique du démarreur. Ces surcouples peuvent provoquer des surchauffes du moteur du démarreur et des détériorations des composants positionnés en aval du pignon d'entraînement.

Pour résoudre ces problèmes, il est connu d'installer un système de limiteur de couple au niveau de la cage d'une roue libre d'un lanceur comme décrit dans le document FR A 2 639 064, ou au niveau du réducteur de vitesses comme décrit dans le document FR A 2 803 345. Toutefois, ces limiteurs de couple présentent l'inconvénient d'être assez complexes à réaliser et n'absorbent pas de manière satisfaisante le surcouple produit par le moteur thermique lors de son démarrage. En outre, ces limiteurs de couple ne sont adaptés qu'à un seul type de démarreur.

Dans le document EP 2 055 937 le pignon d'entraînement est en permanence en prise avec la couronne d'entraînement associée au moteur thermique et il est prévu un dispositif amortisseur de chocs sous la forme d'un amortisseur de torsion intercalé axialement entre le pignon et le limiteur de couple installé au niveau du réducteur de vitesses. Le dispositif comporte trois flasques à savoir un premier flasque configuré pour engrener avec un prolongement cylindrique du pignon, un second flasque configuré pour engrener avec l'arbre d'entraînement et un flasque intermédiaire. Des éléments élastiques à action circonférentielle sont intercalés entre les différents flasques selon plusieurs étages. L'arbre d'entraînement est relié au réducteur de vitesses à limiteur de couple. Cette solution est complexe, encombrante axialement et est adaptée à un démarreur spécifique.

Dans le document JP 4 159455 il est un embrayage à friction multidisques intervenant entre l'arbre d'entraînement du démarreur et un arbre de pignon portant un premier pignon. L'embrayage est implanté entre un épaulement de l'arbre du pignon traversant l'embrayage et le premier pignon engrenant avec un autre pignon monté sur un second arbre de pignon. L'arbre d'entraînement est décalé transversalement par rapport aux deux arbres de pignon. Cette solution est également complexe, encombrante transversalement et est adaptée à un démarreur spécifique.

### Objet de l'invention

Afin d'améliorer les performances des limiteurs de couple existants et de faciliter leur installation sur tout type de démarreur, l'invention propose d'installer un limiteur de couple à l'endroit où le surcouple observable lors des anomalies de fonctionnement du moteur thermique est le plus important, c'est-à-dire autour du pignon d'entraînement du démarreur.

Plus précisément, le limiteur de couple selon l'invention comporte deux disques de frictions entraînés en rotation par l'arbre d'entraînement et installés de part et d'autre du pignon d'entraînement monté fou sur l'arbre. Cet ensemble est bloqué axialement d'un côté par une butée, tandis qu'un effort axial est appliqué de l'autre côté par des éléments élastiques afin de maintenir en pression le pignon entre les deux disques de friction.

En fonctionnement, les disques et le pignon d'entrainement se comportent comme ne formant qu'une seule et même pièce, le pignon enserré entre les disques étant entrainé en rotation par ces derniers de sorte que le pignon d'entraînement peut transmettre du couple à la couronne d'entraînement. Ce couple transmis dépend de la pression exercée par les disques de part et d'autre du pignon. Lorsque qu'un surcouple dû à une anomalie de fonctionnement du moteur thermique apparait, le pignon glisse entre les disques, ce qui permet de préserver du surcouple tous les composants du démarreur positionnés en aval du pignon.

En outre, en installant le limiteur de couple de part et d'autre du pignon d'entraînement, le limiteur de couple selon l'invention est facilement adaptable à tout type de démarreurs qui, s'ils peuvent présenter des structures différentes, comportent tous un pignon d'entraînement. Ainsi le limiteur de couple selon l'invention est utilisable avec les deux types de démarreurs existants à lanceur ou à engrènement permanent.

L'invention concerne donc un démarreur comportant un arbre d'entraînement sur lequel est monté un pignon d'entraînement destiné à entraîner en rotation la couronne d'entraînement d'un moteur thermique, ce pignon d'entraînement comportant une couronne de dents délimitée par deux faces d'extrémités,
caractérisé en ce qu'il comporte un limiteur de couple formé par :
- des disques de friction installés sur l'arbre d'entraînement de part et d'autre du pignon monté fou sur cet arbre, ces disques de friction étant entraînés en rotation par cet arbre,
- ces disques de friction ayant une face frontale tournée vers le pignon d'entraînement en contact chacune avec une face d'extrémité du pignon d'entraînement,
- une butée bloquant en translation axiale un côté de l'ensemble formé par les disques de friction et le pignon d'entraînement, et
- au moins un élément élastique appliquant une pression axiale de l'autre côté de l'ensemble formé par les disques de friction et le pignon d'entraînement,
- de manière à maintenir le pignon d'entraînement en pression entre les faces frontales des deux disques de friction.

Selon une réalisation, les disques de friction présentant chacun une face dorsale opposée à leur face frontale,
- la butée bloque en translation une face dorsale d'un des disques de friction, et
- l'élément élastique applique une pression axiale contre la face dorsale de l'autre disque de friction.

Selon une réalisation, la butée axiale est formée par un circlips entrant en coopération avec une gorge ménagée dans l'arbre d'entraînement.

Selon une réalisation, la butée axiale est formée par un écrou vissé sur l'arbre d'entraînement par l'intermédiaire d'un filet.

Selon une réalisation, l'élément élastique consiste en deux rondelles élastiques de type Belleville montées en série l'une avec l'autre sur l'arbre d'entraînement.

Selon une réalisation, les faces d'extrémité du pignon et les faces frontales des disques de friction en contact sont planes.

Selon une réalisation, les faces d'extrémité du pignon et les faces frontales des disques de friction en contact présentent des formes tronconiques complémentaires.

Selon une réalisation, le contact entre les faces d'extrémité du pignon et les faces frontales des disques de friction est direct.

Selon une réalisation, le contact entre les faces d'extrémité du pignon et les faces frontales des disques de friction est indirect, les faces d'extrémité du pignon et les faces frontales des disques de friction étant revêtues d'une couche de frottement.

Selon une réalisation, les disques de friction comportent des cannelures sur leur face périphérique interne destinées à entrer en coopération avec des cannelures ménagées sur l'arbre d'entraînement.

Selon une réalisation, l'arbre d'entraînement appartient à un ensemble lanceur.

Selon une réalisation, le pignon d'entraînement du démarreur est destiné à engrener de manière permanente avec la couronne **d'entraînement** du moteur thermique.

L'invention concerne en outre un limiteur de couple destiné à être installé sur un arbre d'entraînement sur lequel est monté un pignon de d'entraînement adapté pour entraîner en rotation la couronne d'un moteur thermique, ce pignon d'entraînement comportant une couronne de dents délimitée par deux faces d'extrémités,
caractérisé en ce qu'il comporte :
- des disques de friction destinés à être installés sur l'arbre d'entraînement de part et d'autre du pignon monté fou sur cet arbre, ces disques de friction étant destinés à être entraînés en rotation par cet arbre,
- ces disques de friction ayant une face frontale tournée vers le pignon d'entraînement en contact chacune avec une face d'extrémité du pignon d'entraînement,
- une butée destinée à bloquer en translation axiale un côté de l'ensemble formé par les disques de friction et le pignon d'entraînement, et
- au moins un élément élastique sous pression destiné à appliquer une pression axiale de l'autre côté de l'ensemble formé par les disques de friction et le pignon d'entraînement,
- de manière à maintenir le pignon d'entraînement en pression entre les faces frontales des deux disques de friction.

L'invention sera mieux comprise à la lecture de la description qui suit et à l'examen des figures qui l'accompagnent.

### Brève description des dessins

Ces figures ne sont données qu'à titre illustratif mais nullement limitatif de l'invention. Elles montrent :

Figures 1a-1c : des vues en 3 dimensions assemblé et en éclaté ainsi qu'une vue en coupe d'un premier mode de réalisation du limiteur de couple selon l'invention ayant une butée axiale formée par un circlips ;

Figures 2a-2c: des vues en 3 dimensions assemblé et en éclaté ainsi qu'une vue en coupe d'un deuxième mode de réalisation du limiteur de couple selon l'invention ayant une butée axiale formée par un écrou ;

Figures 3a-3c : des vues en 3 dimensions assemblé et en éclaté ainsi qu'une vue en coupe d'un troisième mode de réalisation du limiteur de couple selon l'invention ayant des faces de contact inclinées entre le pignon d'entraînement et les disques de friction ;

Figures 4a-4b : des représentations schématiques des deux types de démarreurs respectivement à ensemble lanceur et à engrènement permanent intégrant un limiteur de couple selon l'invention ;

Figure 5a-5b : des vues en 3 dimensions et en coupe de l'assemblage entre l'extrémité avant de l'arbre d'entraînement et le palier avant du démarreur selon l'invention à engrènement permanent.

### Description d'exemples de réalisation de l'invention

Les éléments identiques, similaires ou analogues conservent les mêmes références d'une Figure à l'autre.

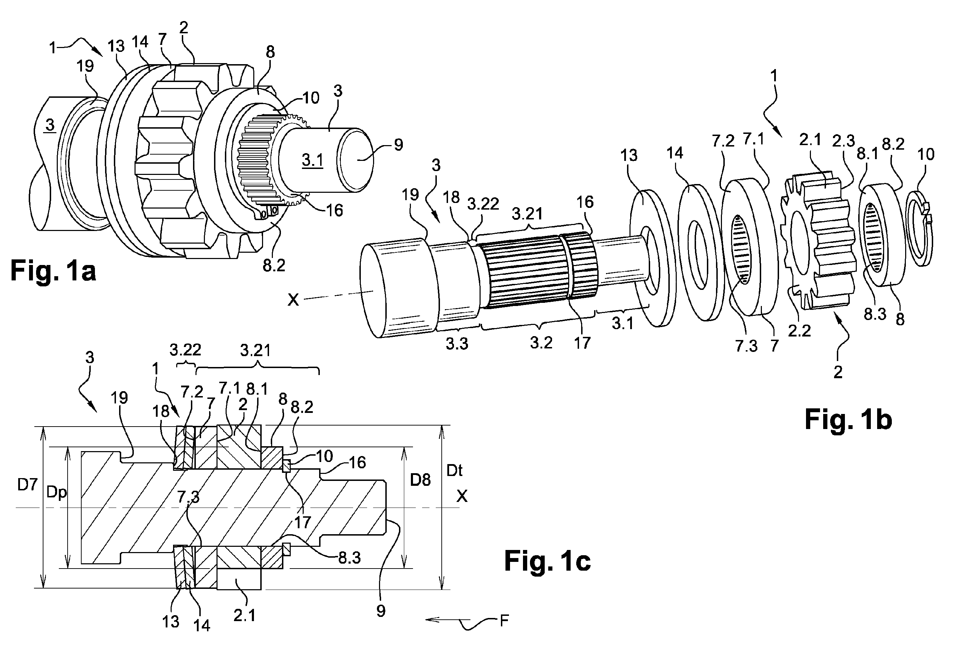

Les Figures 1 à 3 montrent un limiteur de couple 1 selon l'invention installé de part et d'autre d'un pignon 2 d'entraînement destiné à entraîner en rotation une couronne d'entraînement associée à un moteur thermique. Ce pignon 2 est monté fou sur un arbre 3 d'entraînement d'un démarreur.

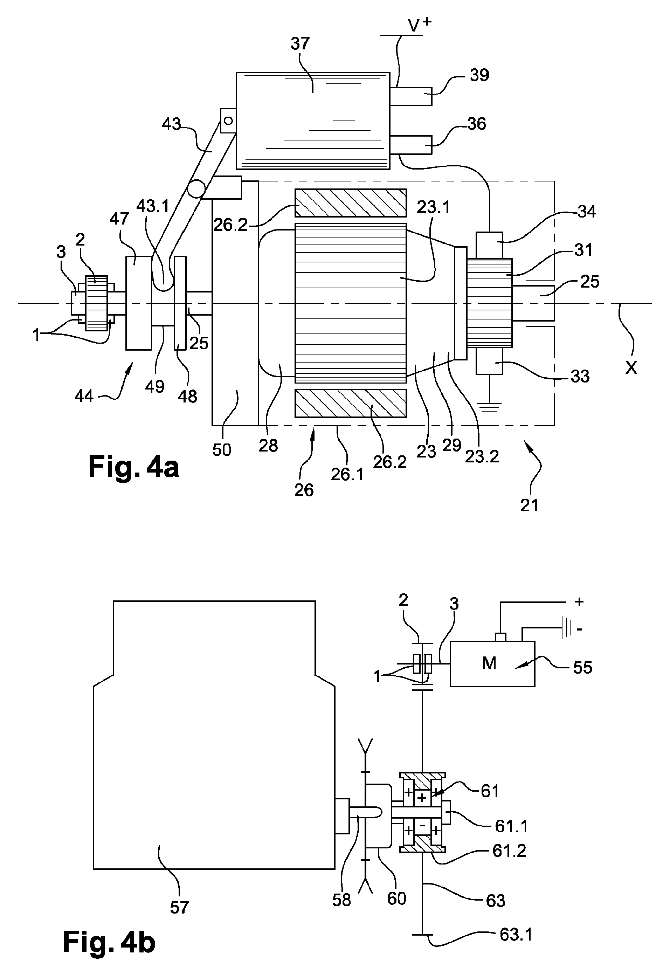

Cet arbre 3 est entraîné par le moteur électrique du démarreur. Comme on le verra sur les Figures 4a-4b, cet arbre 3 peut correspondre au manchon d'une roue libre d'un démarreur muni d'un lanceur ou appartenir à un démarreur dépourvu de lanceur, auquel cas le pignon 2 engrène en permanence avec la couronne d'entraînement du moteur thermique.

Le limiteur de couple 1 comporte des disques de friction 7, 8 enserrant le pignon 2 de part et d'autre, une butée 10 pour bloquer axialement l'ensemble des disques 7, 8 et du pignon 2, et des éléments élastiques 13, 14 compressés pour appliquer un effort axial et presser l'ensemble formé des disques 7, 8 et du pignon 2 contre la butée 10 afin de maintenir en pression le pignon 2 entre les disques de friction 7, 8.

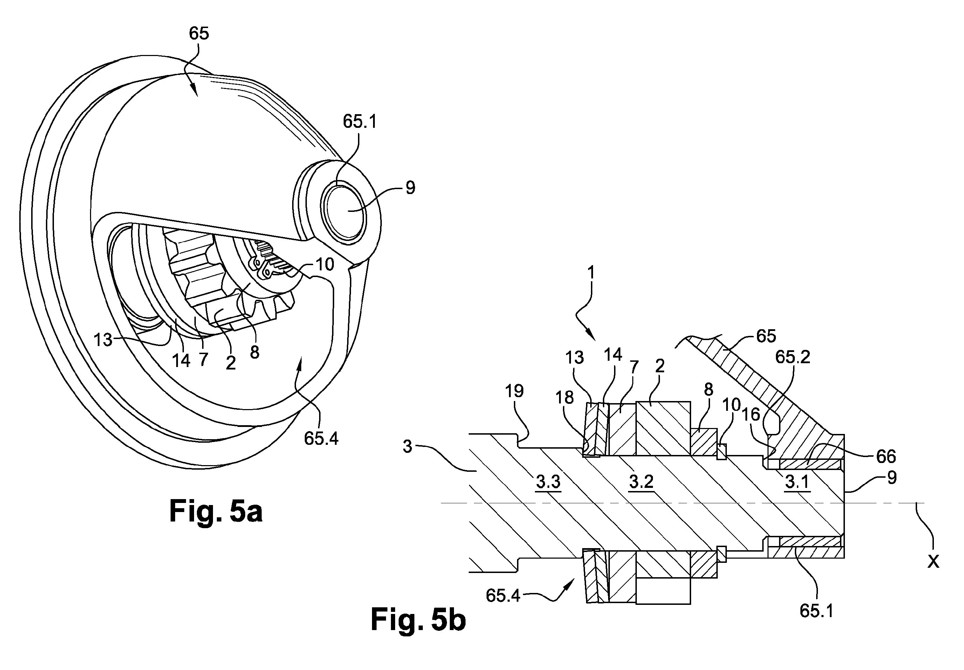

Plus précisément, l'arbre 3, d'axe X de symétrie axiale, comporte, du côté de son extrémité avant 9, un tronçon 3.1 avant destiné à être porté par un palier avant 65 du démarreur (cf Figures 5a-5b). Cet arbre 3 présente un deuxième tronçon 3.2 séparé du premier tronçon 3.1 par un épaulement 16. Ce deuxième tronçon 3.2 présente un diamètre légèrement supérieur au diamètre du premier tronçon 3.1 et s'étend entre l'épaulement 16 et un deuxième épaulement 18. Le pignon 2 et le limiteur de couple 1 sont destinés à être installés sur ce deuxième tronçon 3.2.

Ce deuxième tronçon 3.2 comprend une portion cannelée 3.21 et une portion lisse 3.22. La portion cannelée 3.21 s'étend entre l'épaulement 16 et l'extrémité avant de la portion 3.22. Cette portion cannelée 3.21 a une longueur au moins égale à l'épaisseur de l'ensemble formé par le pignon 2 et les deux disques 7, 8. Les cannelures s'étendent axialement par rapport à l'arbre 3 et sont destinées à entrer en coopération avec des cannelures complémentaires des périphéries internes des disques de friction 7, 8. Une gorge 17 destinée à recevoir une butée 10 prenant la forme d'un circlips est ménagée dans la partie avant de la portion cannelée 3.21. La portion lisse 3.22 s'étend entre l'extrémité arrière de la partie cannelée 3.21 et le deuxième épaulement 18. Cette portion lisse 3.22 est destinée à accueillir les éléments élastiques 13, 14 qui viendront en appui contre l'épaulement 18 pour exercer un effort axial sur l'ensemble formé par les disques 7, 8 et le pignon d'entraînement 2.

Cet arbre 3 présente également un tronçon 3.3 de diamètre supérieur au deuxième tronçon 3.2 qui s'étend entre l'épaulement 18 et un épaulement 19 relié dans sa partie arrière au corps de l'arbre 3.

Le pignon d'entraînement 2 monté fou sur le deuxième tronçon 3.2 de l'arbre 3 comporte une couronne 2.1 de dents délimitée latéralement par des faces d'extrémité 2.2, 2.3.

Les disques de friction 7, 8 présentent une forme cylindrique et comportent une ouverture 7.3, 8.3 en leur centre pour permettre leur montage sur l'arbre 3 de part et d'autre du pignon 2. Ces disques 7, 8 présentent chacun une face frontale 7.1, 8.1 tournée vers le pignon 2 et en contact chacune avec une face d'extrémité 2.2, 2.3 du pignon et une face dorsale 7.2, 8.2 opposée à la face frontale 7.1, 8.1. Ces disques de friction 7, 8 sont obtenus par exemple à partir d'un alliage de cuivre (par exemple bronze ou laiton) ou analogue.

Plus précisément, la face frontale 7.1 du disque 7 est en contact avec la face d'extrémité arrière 2.2 du pignon 2 ; tandis que la face frontale 8.1 du disque 8 est en contact avec la face d'extrémité avant 2.3 du pignon 2. Le contact entre les faces frontales 7.1, 8.1 des disques 7, 8 et les faces d'extrémité 2.2, 2.3 des pignons est ici direct. Alternativement, pour augmenter le frottement, les faces 2.2, 2.3 du pignon 2 et/ou les faces frontales 7.1, 8.1 des disques 7, 8 sont revêtues d'une couche de frottement.

Ces disques 7, 8 de friction sont liés en rotation avec l'arbre d'entraînement 3. A cet effet, les disques de friction 7, 8 présentent sur leur périphérie interne délimitant les ouvertures 7.3, 8.3 des cannelures complémentaires de celle du deuxième tronçon 3.2 de l'arbre 3.

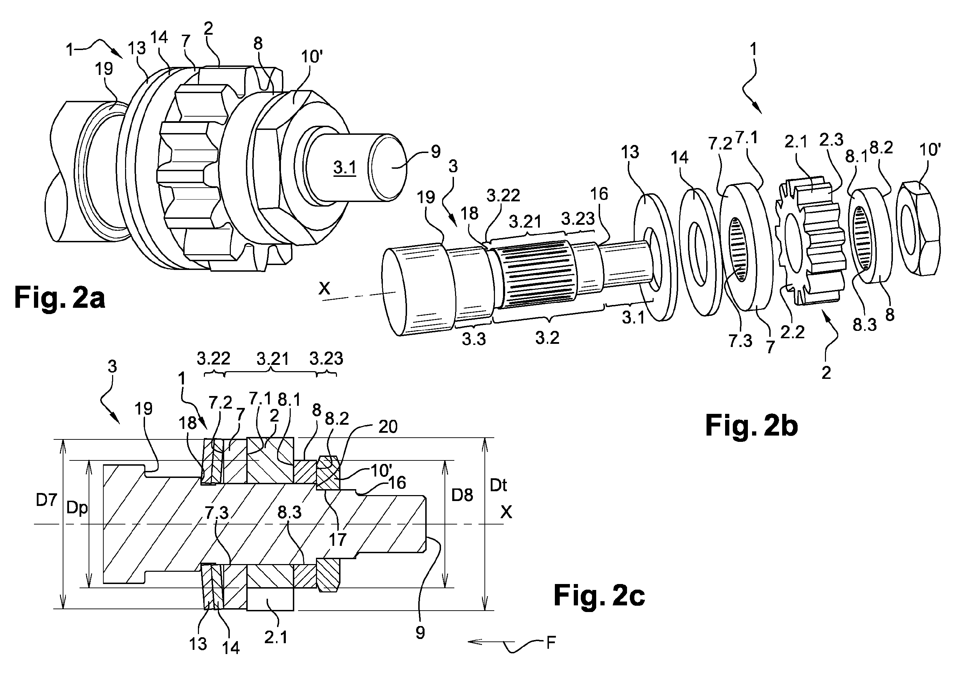

Dans les réalisations des Figures 1 et 2, le disque de friction 8, positionné du côté de l'extrémité avant 9, a un diamètre D8 inférieur à celui D7 de l'autre disque de friction 7 positionné de l'autre côté du pignon 2. Ainsi le disque 8 est situé à l'avant du disque 7. Le diamètre D8 du disque 8 est ici sensiblement égal au diamètre Dp du cercle de pied du pignon, qui est le cercle passant par la base des dents. Le diamètre D7 du disque 7 est égal sensiblement au diamètre Dt du cercle de tête, qui passe par le sommet des dents. Une telle configuration permet aux dents du pignon 2 de s'engager entre les dents de la couronne d'entraînement sans être gênées par le disque 8. En variante, lorsque le pignon 2 engrène de manière permanente avec les dents de la couronne, les deux disques 7, 8 pourront avoir un diamètre égal au diamètre Dt du cercle de tête.

La face dorsale 8.2 du disque 8 situé du côté de l'extrémité 9 est en appui sur la butée 10 solidaire axialement de l'extrémité libre de l'arbre 3. Ici, la butée 10 est formée par un circlips destiné à entrer en coopération avec la gorge 17 de réception ménagée dans l'arbre 3 pour maintenir le circlips axialement.

Les éléments élastiques 13, 14 prenant appui sur l'épaulement 18 exercent une pression axiale contre la face dorsale 7.2 du disque 7. Le disque 8 étant en appui contre la butée 10, le pignon 2 est maintenu en pression entre les deux disques de friction 7, 8. La pression d'appui et par conséquent le couple d'entraînement du pignon 2 est déterminé ainsi par la tension des éléments élastiques 13, 14.

Ces éléments élastiques 13, 14 prennent ici la forme de rondelles de Belleville. Il est prévu ici deux rondelles de Belleville montées en série pour obtenir la pression souhaitée tout en ayant un encombrement radial réduit. En variante, le nombre de rondelles 13, 14 utilisé peut varier pour adapter le couple d'entraînement du pignon 2.

Le fonctionnement est le suivant : en marche normale, par l'appui des rondelles 13, 14 sur les éléments 2, 7 et 8, ces derniers se comportent comme s'ils ne faisaient qu'une seule et même pièce. En effet, le pignon 2 enserré entre les disques 7 et 8 est entraîné en rotation par les disques 7 et 8 liés en rotation avec l'arbre 3, de sorte que le pignon 2 peut transmettre du couple à la couronne d'entraînement.

Par contre, si des efforts supérieurs à ceux normaux se font jour, par exemple si le couple résistant appliqué au pignon 2 est supérieur au couple du moteur électrique du démarreur, le pignon 2 entre en glissement contre les disques de friction 7 et 8, ce qui permet de limiter le couple appliqué au démarreur. On évite ainsi de provoquer des surchauffes du moteur du démarreur ou de détériorer les éléments mécaniques du démarreur situés en aval du pignon 2.

En variante, comme représenté sur les Figures 2a-2c, pour maintenir axialement l'ensemble formé par le pignon 2 et les disques 7, 8, on remplace le circlips par un écrou 10' serré contre la face dorsale 8.2 du disque 8. A cet effet, l'écrou 10' entre en coopération avec un filet 3.23 réalisé à la place de la gorge 17. Plus précisément, ce filet 3.23 est ménagé dans la partie avant de la portion 3.2 et s'étend entre l'épaulement 16 et un épaulement 20 positionné entre l'extrémité arrière du filet 3.23 et l'extrémité avant de la partie cannelé 3.21. Lorsqu'il est serré au maximum, l'écrou 10' entre en butée contre l'épaulement 20.

Une telle configuration permet de faire varier l'effort élastique axial appliqué par les rondelles élastiques 13, 14 en faisant varier l'effort de serrage de l'écrou 10'. Les autres éléments du limiteur de couple 1 sont identiques et sont configurés de la même manière que ceux des Figures 1a-1c : les disques 7 et 8 sont installés de part et d'autre du pignon 2, tandis que les rondelles élastiques 13, 14 positionnées entre l'épaulement 18 et la face dorsale 7.2 du disque de friction 7 exercent un effort axial afin de maintenir le pignon 2 en pression entre les deux disques de friction 7, 8.

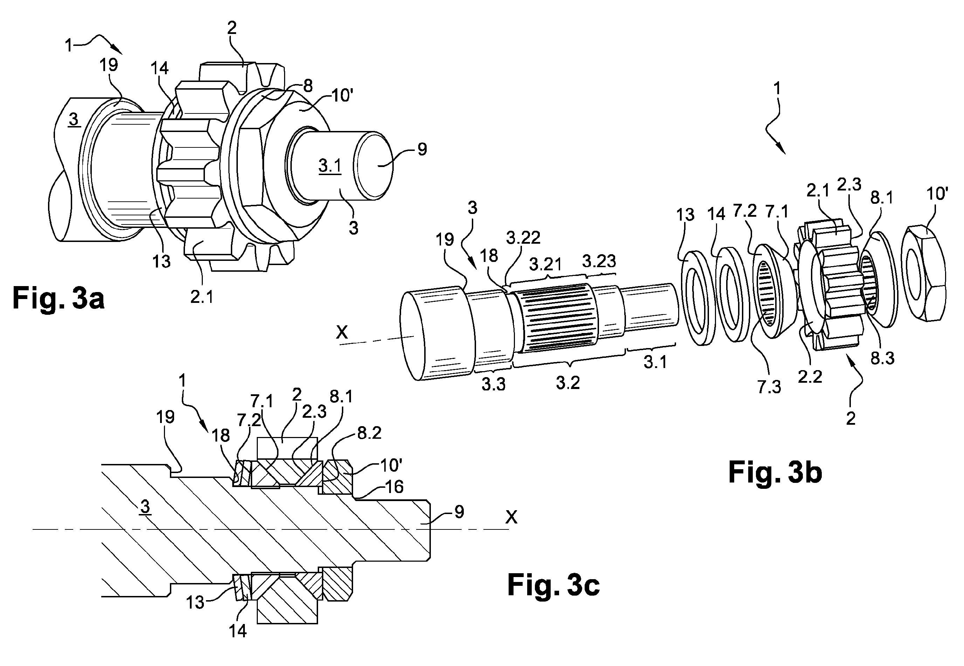

En variante, comme représenté sur les Figures 3a-3c, au lieu d'avoir des faces de contact 7.1-2.2 et 8.1-2.3 entre les disques de friction 7, 8 et le pignon 2 planes, comme pour les réalisations précédentes, les faces de contact entre les disques 7, 8 et le pignon 2 sont de forme tronconique. Ainsi, le pignon 2 présente des faces d'extrémité 2.2, 2.3 tronconiques en creux ayant un diamètre qui augmente lorsque l'on se déplace du centre du pignon 2 vers l'extrémité 2.2, 2.3 du pignon 2. Tandis que les disques de friction 7, 8 présentent chacun une face frontale 7.1, 8.1 tronconique en relief de forme complémentaire ayant un diamètre qui diminue lorsque l'on se déplace de la face dorsale 7.2, 8.2 vers la face frontale 7.1, 8.1.

Ainsi, les faces tronconiques des disques 7, 8 entrent en coopération avec les parties tronconiques complémentaires en creux définies par les faces 2.2, 2.3 du pignon 2. On augmente ainsi la surface de contact entre les faces des disques 7, 8 et les faces 2.2, 2.3 du pignon 2 par rapport à des surfaces de contact planes. En outre, par rapport aux réalisations précédentes, on limite l'encombrement axial du limiteur de couple 1.

Les autres éléments du limiteur de couple 1 sont identiques et sont configurés de la même manière que ceux des Figures 2a-2c : l'ensemble formé par les disques de friction 7, 8 est bloqué par la butée axiale 10' prenant la forme d'un écrou, tandis que les éléments élastiques 13, 14 positionnés entre l'épaulement 18 et la face dorsale 7.2 du disque de friction 7 exercent un effort axial afin de maintenir le pignon 2 en pression entre les deux disques de friction 7, 8.

Bien entendu, on peut aussi réaliser une autre configuration du limiteur de couple 1 selon l'invention non représentée dans laquelle on combine des faces de contact tronconiques entre le pignon 2 et les disques de friction 7, 8 avec une butée axiale 10 prenant la forme d'un circlips.

En variante, les rondelles élastiques 13, 14, sont remplacées par des ressorts à boudin.

Dans les modes de réalisation décrits ci-dessus, lors du montage du limiteur de couple 1 selon l'invention sur l'arbre 3, on enfile les rondelles élastiques 13, 14 en série par l'extrémité 9, de manière que la face latérale de la rondelle 13 entre en butée contre l'épaulement 18. Ces rondelles 13, 14 sont positionnées sur l'arbre 3 de telle sorte que le creux de la forme en V qu'elles présentent en coupe soit tourné du côté de l'extrémité 9. Ensuite, on positionne sur l'arbre 3, le disque 7 jusqu'à ce que sa face dorsale 7.2 soit plaquée contre les rondelles élastiques 13, 14.

On monte ensuite le pignon 2 sur l'arbre 3, de sorte que sa face d'extrémité 2.2 est plaquée contre la face frontale 7.1 du disque 7. On installe ensuite le disque de friction 8, de sorte que la face frontale 8.1 est plaquée contre la face d'extrémité 2.3 du pignon 2.

On exerce ensuite un effort axial F de l'extrémité 9 vers l'épaulement 18, s'il y a lieu à l'aide d'un outillage spécifique (non représenté) pour maintenir en pression les rondelles élastiques 13, 14 et on installe la butée 10 qui peut prendre la forme d'un circlips. Dans ce cas, on introduit le circlips dans la gorge 17. On relâche ensuite l'effort F de sorte que le pignon 2 est maintenu en pression par les rondelles élastiques 13, 14 entre les disques de friction 7, 8.

En variante, si la butée prend la forme d'un écrou 10', on visse l'écrou 10' pour mettre en pression le pignon 2 entre les deux disques de friction 7, 8.

La Figure 4a montre un démarreur 21 à ensemble lanceur intégrant un limiteur de couple 1 selon l'invention.

Ce démarreur 21 comporte d'une part un rotor 23, encore appelé induit, pouvant tourner autour d'un axe longitudinal X de manière à entraîner un arbre de rotor 25 et d'autre part un stator 26, encore appelé inducteur autour du rotor 23.

Le stator 26 comporte une culasse 26.1 portant une pluralité d'aimants permanents 26.2. En variante, ces aimants 26.2 sont remplacés par des électroaimants.

Le rotor 23 comporte un corps 23.1 de rotor disposé en regard des aimants 26.2 du stator et un bobinage 23.2 enroulé dans des encoches du corps de rotor 23.1.

Le bobinage 23.2 comporte une pluralité de fils conducteurs formant, de part et d'autre du corps de rotor 23 un chignon avant 28 et un chignon arrière 29.

Le rotor 23 est pourvu à l'arrière d'un collecteur 31 comprenant des pièces de contact connectées électriquement au bobinage 23.2.

Un groupe de balais 33 et 34 est prévu pour l'alimentation électrique du bobinage 23.2, l'un des balais 33 étant relié à la masse du dispositif 21 et un autre des balais 34 étant relié à une borne électrique 36 d'un contacteur 37 via un fil. Les balais 33 et 34 viennent frotter sur le collecteur 31 lorsque le rotor 23 est en rotation.

Le contacteur 37 comprend outre la borne 36 reliée au balai 34 une borne 39 reliée via un élément de liaison électrique à une alimentation électrique V+ du véhicule, notamment une batterie, non représentée.

Le contacteur 37 est apte à actionner une fourchette 43 pour déplacer un ensemble lanceur 44 d'une position de repos dans laquelle l'ensemble lanceur 44 est situé à proximité du rotor 23 vers une position d'entraînement du moteur à combustion. L'ensemble lanceur 44 comprend une roue libre 47 et une rondelle poulie 48 définissant entre elles une gorge 49 pour recevoir l'extrémité 43.1 de la fourchette 43.

La roue libre 47 est formée de manière connue en soi par une couronne d'entraînement entraînée par l'arbre 25 de rotor et une douille liées entre elles par l'intermédiaire de galets.

L'arbre d'entraînement 3 sur lequel est installé le pignon d'entraînement 2 se situe dans le prolongement de la douille de la roue libre 47. Le limiteur de couple 1 selon l'invention est installé de part et d'autre du pignon 2 suivant une des réalisations des Figures 1 à 3.

S'il y a lieu, un réducteur de vitesses 50 est interposé entre le rotor 23 et l'arbre d'entraînement 3 de manière à adapter la vitesse du rotor 23 à l'entraînement du moteur thermique. En variante, le démarreur 21 est dépourvu de réducteur de vitesses 50.

La Figure 4b montre un démarreur 55 à pignon 2 à engrènement permanent intégrant un limiteur de couple 1 selon l'invention.

Dans cette réalisation, le moteur thermique 57 a un vilebrequin portant sur son arbre 58, par l'intermédiaire d'un dispositif d'accouplement 60, une roue libre 61. La roue libre 61 comporte un premier élément 61.1 solidaire de l'arbre du vilebrequin 58 et un deuxième élément 61.2 qui constitue une couronne concentrique au premier élément 61.1. Cette roue libre 61 assure le transfert de puissance depuis le démarreur 55 vers le moteur thermique 57 et uniquement dans ce sens.

La couronne 61.2 se prolonge extérieurement par un disque annulaire 63 qui porte à sa périphérie une denture 63.1. Cette denture 63.1 engrène avec le pignon d'entraînement 2 porté par l'arbre d'entraînement 3 du démarreur 55. Ce démarreur 55 a les caractéristiques habituelles d'un démarreur de véhicule.

Le limiteur de couple 1 selon l'invention est installé de part et d'autre du pignon 2 suivant une des réalisations des Figures 1 à 3.

Les Figures 5a-5b montrent respectivement une vue en 3 dimensions et en coupe de l'assemblage entre la partie avant 9 de l'arbre 3 et un palier avant 65 du démarreur 55 à engrènement permanent. Le pignon 2 monté sur l'arbre 3 est associé ici à un limiteur de couple 1 selon les Figures 1 mais en variante, il pourrait être associé à tout autre type de limiteur de couple 1 selon l'invention.

Plus précisément, la portion avant 3.1 de l'arbre 3 est portée par le palier avant 65 par l'intermédiaire d'un coussinet 66 positionné entre l'arbre 3 et le palier 65. A cet effet, la portion avant 3.1 de l'arbre est introduite à l'intérieur d'une ouverture axiale 65.1 ménagée dans une face transversale du palier 65, l'épaulement 16 assurant un rôle de butée entrant en coopération avec une paroi intérieure 65.2 du palier 65 transversale à l'arbre 3. L'arbre 3 et l'ouverture 65.1 sont coaxiaux.

Le pignon 2 se situe ainsi à l'intérieur du démarreur, ce qui permet de le protéger des nuisances extérieures (chocs, poussières). Toutefois en variante, l'invention serait également applicable avec un démarreur à pignon sortant, c'est-à-dire un démarreur muni d'un pignon 2 se situant à l'extérieur du palier 65 et donc du démarreur.

Le palier 65 présente également une ouverture 65.4 orientée vers la couronne d'entraînement du moteur thermique afin de permettre l'engrènement du pignon 2 avec cette couronne d'entraînement.

On note que, de manière analogue, l'extrémité arrière de l'arbre 3 est portée par un palier arrière du démarreur (non représenté).

On notera que le limiteur de couple selon l'invention est compact, peut encombrant axialement et robuste. Le démarreur se différencie d'un démarreur conventionnel par la modification de l'extrémité avant de son arbre d'entraînement. Il est moins encombrant axialement que l'amortisseur de torsion du document EP 2 055 937 dans lequel le premier flasque est solidaire en rotation du pignon, qui présente un mouvement de rotation limité par rapport à l'arbre d'entraînement du fait que l'amortisseur de torsion autorise un mouvement de rotation limité du pignon d'entraînement par rapport à l'arbre d'entraînement. Le limiteur de couple selon l'invention autorise un mouvement de rotation illimité entre le pignon et l'arbre d'entraînement et est moins complexe. En outre la surface de contact entre le disque 8 et le pignon 2 est plus grande que la surface de contact entre le pignon 8 et l'arrêt 43 du document EP 2 055 937.

Dans le document JP 4 159455 Il n'est pas prévu un montage d'un pignon fou sur l'arbre d'entraînement, l'embrayage à friction engrenant avec l'arbre d'entraînement et l'arbre du premier pignon. Cet embrayage ne constitue pas un limiteur de couple implanté selon l'invention sur l'arbre d'entraînement. Le limiteur de couple selon l'invention est moins complexe et moins encombrant transversalement que l'embrayage à friction du document JP 4 159455.

## Revendications

1. Démarreur (21, 55) comportant un arbre d'entraînement (3) sur lequel est monté un pignon (2) d'entraînement destiné à entraîner en rotation la couronne d'entraînement d'un moteur thermique, ce pignon (2) d'entraînement comportant une couronne de dents (2.1) délimitée par deux faces d'extrémités (2.2, 2.3),
**caractérisé en ce qu'**il comporte un limiteur de couple (1) formé par :
- des disques de friction (7, 8) installés sur l'arbre d'entraînement (3) de part et d'autre du pignon (2) monté fou sur cet arbre (3), ces disques de friction (7, 8) étant entraînés en rotation par cet arbre (3),
- ces disques de friction (7, 8) ayant une face frontale (7.1, 8.1) tournée vers le pignon (2) d'entraînement en contact chacune avec une face d'extrémité (2.2, 2.3) du pignon (2) d'entraînement,
- une butée (10, 10') bloquant en translation axiale un côté de l'ensemble formé par les disques de friction (7, 8) et le pignon (2) d'entraînement, et
- au moins un élément élastique (13, 14) appliquant une pression axiale de l'autre côté de l'ensemble formé par les disques de friction (7, 8) et le pignon (2) d'entraînement,
- de manière à maintenir le pignon (2) d'entraînement en pression entre les faces frontales (7.1, 8.1) des deux disques de friction (7, 8).

2. Démarreur selon la revendication 1, **caractérisé en ce que** les disques de friction (7, 8) présentant chacun une face dorsale (7.2, 8.2) opposée à leur face frontale (7.1, 8.1),
- la butée (10) bloque en translation une face dorsale (8.2) d'un des disques de friction (8), et
- l'élément élastique (13, 14) applique une pression axiale contre la face dorsale (7.2) de l'autre disque de friction (7).

3. Démarreur selon la revendication 1 ou 2, **caractérisé en ce que** la butée axiale est formée par un circlips (10) entrant en coopération avec une gorge (17) ménagée dans l'arbre d'entraînement (3).

4. Démarreur selon l'une des revendications 1 à 3, **caractérisé en ce que** la butée axiale est formée par un écrou (10') vissé sur l'arbre d'entraînement par l'intermédiaire d'un filet (3.23).

5. Démarreur selon l'une des revendications 1 à 4, **caractérisé en ce que** l'élément élastique consiste en deux rondelles élastiques (13, 14) de type Belleville montées en série l'une avec l'autre sur l'arbre d'entraînement.

6. Démarreur selon l'une des revendications 1 à 5, **caractérisé en ce que** les faces d'extrémité (2.2, 2.3) du pignon (2) et les faces frontales (7.1, 8.1) des disques de friction (7, 8) en contact sont planes.

7. Démarreur selon l'une des revendications 1 à 5, **caractérisé en ce que** les faces d'extrémité (2.1, 2.3) du pignon (2) et les faces frontales (7.1, 8.1) des disques de friction (7, 8) en contact présentent des formes tronconiques complémentaires.

8. Démarreur selon l'une des revendications 1 à 7, **caractérisé en ce que** le contact entre les faces d'extrémité (2.1, 2.3) du pignon (2) et les faces frontales (7.1, 8.1) des disques de friction (7, 8) est direct.

9. Démarreur selon l'une des revendications 1 à 7, **caractérisé en ce que** le contact entre les faces d'extrémité (2.1, 2.3) du pignon (2) et les faces frontales (7.1, 8.1) des disques de friction (7, 8) est indirect, les faces d'extrémité (2.1, 2.3) du pignon (2) et les faces frontales (7.1, 8.1) des disques de friction (7, 8) étant revêtues d'une couche de frottement.

10. Démarreur selon l'une des revendications 1 à 9, **caractérisé en ce que** les disques de friction (7, 8) comportent des cannelures sur leur face périphérique interne destinées à entrer en coopération avec des cannelures ménagées sur l'arbre d'entraînement (3).

11. Démarreur selon l'une des revendications 1 à 10, **caractérisé en ce que** l'arbre d'entraînement (3) appartient à un ensemble lanceur.

12. Démarreur selon l'une des revendications 1 à 10, **caractérisé en ce que** le pignon d'entraînement (2) du démarreur est destiné à engrener de manière permanente avec la couronne du moteur thermique.

13. Limiteur de couple (1) destiné à être installé sur un arbre d'entraînement (3) sur lequel est monté un pignon (2) de d'entraînement adapté pour entraîner en rotation la couronne d'un moteur thermique, ce pignon (2) d'entraînement comportant une couronne de dents (2.1) délimitée par deux faces d'extrémités (2.2, 2.3),
**caractérisé en ce qu'**il comporte :
- des disques de friction (7, 8) destinés à être installés sur l'arbre d'entraînement (3) de part et d'autre du pignon (2) monté fou sur cet arbre (3), ces disques de friction (7, 8) étant destinés à être entraînés en rotation par cet arbre (3),
- ces disques de friction (7, 8) ayant une face frontale (7.1, 8.1) tournée vers le pignon (2) d'entraînement en contact chacune avec une face d'extrémité (2.2, 2.3) du pignon (2) d'entraînement,
- une butée (10) destinée à bloquer en translation axiale un côté de l'ensemble formé par les disques de friction (7, 8) et le pignon (2) d'entraînement, et
- au moins un élément élastique (13, 14) sous pression destiné à appliquer une pression axiale de l'autre côté de l'ensemble formé par les disques de friction (7, 8) et le pignon (2) d'entraînement,
- de manière à maintenir le pignon (2) d'entraînement en pression entre les faces frontales (7.1, 8.1) des deux disques de friction (7, 8).
